Europäisches Patentamt

European Patent Office

Office européen des brevets

(11) Numéro de publication: **0 266 332 B1**

(12) # FASCICULE DE BREVET EUROPEEN

(45) Date de publication de fascicule du brevet: **24.06.92** (51) Int. Cl.⁵: **G12B 5/00**, H01Q 1/18

(21) Numéro de dépôt: **87870128.3**

(22) Date de dépôt: **17.09.87**

(54) **Dispositif mécanique de stabilisation d'une plate-forme.**

(30) Priorité: **18.09.86 LU 86598**

(43) Date de publication de la demande:
**04.05.88 Bulletin 88/18**

(45) Mention de la délivrance du brevet:
**24.06.92 Bulletin 92/26**

(84) Etats contractants désignés:
**BE DE ES FR GB**

(56) Documents cités:
**EP-A- 0 118 729**

(73) Titulaire: **SAIT ELECTRONICS S.A.
Chaussée de Ruisbroek, 66
B-1190 Bruxelles(BE)**

(72) Inventeur: **Gosiau, Stéphane
Zavelstraat 40
B-3030 Leuven (Heverlee)(BE)**
Inventeur: **Ledocq, Charles-Marie
33, Chemin du champ de Mars
B-7000 Mons(BE)**

(74) Mandataire: **Vanderperre, Robert et al
Bureau Vander Haeghen S.A. Rue Colonel
Bourg 108 A
B-1040 Bruxelles(BE)**

Rank Xerox (UK) Business Services

## Description

La présente invention est relative à un dispositif pour stabiliser mécaniquement, par rapport à un support soumis à des forces d'inertie tendant à l'écarter d'une position prédéterminée, une plate-forme comportant une pièce à laquelle est fixé un objet, cette plate-forme étant reliée au support par un système de suspension comportant deux axes coplanaires et perpendiculaires entre eux, de façon à permettre un pivotement de la plate-forme par rapport au support.

On connaît, par le document US-A-4.020.491, un dispositif du type décrit dans le paragraphe précédent. Dans ce dispositif connu du type pendulaire, la stabilisation de la plate-forme s'effectue par l'empoi de gyroscopes. Ces gyroscopes reliés à la plate-forme à stabiliser ont des axes de pivotement parallèles aux axes de pivotement d'un anneau et de la plate-forme. Ainsi, les mouvements de la plate-forme sont stabilisés, de façon indépendante, c'est-à-dire que certains gyroscopes compensent le pivotement de la plate-forme autour de son axe de pivotement et que d'autres gyroscopes compensent le pivotement de la plate-forme dû au pivotement de l'anneau autour de son axe de pivotement.

Dans ce dispositif connu, il est nécessaire d'utiliser des systèmes de suspension des pivots des gyroscopes présentant de faibles frictions pour éviter l'introduction d'une erreur de la position des gyroscopes.

Dans ce dispositif connu, le centre de gravité de l'ensemble formé par la plate-forme, l'objet porté par celle-ci et les gyroscopes se trouve en dessous des axes de pivotement de la plate-forme et de l'anneau. Il en est de même pour les gyroscopes qui ont un centre de gravité se trouvant en dessous de leurs pivots; ceci est réalisé dans le but de donner à la plate-forme une position préférentielle.

Ce dispositif présente comme inconvénient d'être lourd et coûteux, car il nécessite l'emploi de deux gyroscopes au minimum et car les centres de gravité des gyroscopes et de l'ensemble formé par les gyroscopes, la plate-forme, l'objet porté par celle-ci et l'anneau sont situés en dessous de leurs axes de pivotement respectifs. L'emploi d'au moins deux gyroscopes nécessite l'utilisation de quatre roulements et d'au moins quatre bras pour porter ces gyroscopes. Les gyroscopes doivent être alimentés en courant électrique.

Ce dispositif présente également comme inconvénient de rendre difficiles et coûteux l'entretien et le remplacement d'un gyroscope détérioré ou le remplacement des roulements d'un gyroscope notamment à cause du poids de celui-ci.

Un autre inconvénient de ce dispositif connu réside dans le fait que, à cause de l'emploi de gyroscopes, ce dispositif perd sa capacité de stabilisation de la plate-forme, en cas de chute de tension dans l'ailmentation de gyroscopes, et est l'objet d'une dérive par rapport à sa position de référence.

On connaît également, par le document EP-A-0 118 729, une plate-forme montée de manière rotative sur un mât ayant une position nominal généralement verticale. Ce mât est relié au moyen d'un cardan à un support qui est monté sur un dispositif soumis au roulis et au tangage.

Une masse déplaçable sous l'effet d'accélérations est supportée par le mât, cette masse étant destinée à compenser les forces de déstabilisation horizontales.

Dans ce système de stabilisation connu, le centre de gravité est situé en dessous du cardan et ce système présente des fréquences de résonances.

De plus, ce système connu présente les inconvénients de nécessiter l'emploi de gyroscopes et donc d'être lourd et coûteux et d'être sensible aux accélérations verticales.

La présente invention vise à remédier aux inconvénients des dispositifs connus.

Suivant la présente invention, le dispositif du type décrit dans le premier paragraphe du présent mémoire est essentiellement caractérisé en ce qu'une masselotte mobile sur un plan de glissement de la plate-forme est soumise à l'action d'au moins un moyens élastique tendant à ramener cette masselotte en permanence vers une position prédéterminée, cette masselotte ayant un poids mg sensiblement égal à la distance l entre le centre de gravité de la plate-forme de l'objet susdit sans la masselotte et le plan de glissement susdit multipliée par la constante d'élasticité k du moyen élastique et en ce que le centre de gravité se trouve à l'intersection des axes précités.

Dans une forme de réalisation du dispositif suivant l'invention, la plate-forme comporte un plateau inférieur qui en est solidaire et qui présente une face constituant le plan de glissement de la masselotte.

Selon une autre particularité du dispositif suivant l'invention, le système de suspension est constitué par un anneau suspendu au support précité de manière à pouvoir pivoter autour d'un premier axe de symétrie, cet anneau présentant un second axe de symétrie coplanaire et perpendiculaire au premier axe de symétrie, autour duquel peut pivoter la plate-forme.

D'autres particularités et détails du dispositif suivant l'invention ressortiront de la description suivante dans laquelle il est fait référence aux dessins ci-annexés.

Dans ces dessins :

- les figures 1 et 2 sont des vues schématiques du dispositif suivant l'invention expliquant le principe de la stabilisation ;
- la figure 3 est une vue en perspective d'une forme de réalisation d'un dispositif suivant l'invention ;
- la figure 4 est une vue en perspective d'une boîte ouverte contenant la masselotte et des ressorts ;
- les figures 5 et 6 sont des vues schématiques du dispositif suivant l'invention expliquant le principe de stabilisation vis-à-vis d'accélérations verticales et
- la figure 7 est une vue partielle en coupe d'une boîte similaire à celle de la figure 4, mais munie d'un système pour compenser les effets d'accélérations verticales.

Dans ces différentes figures, les mêmes notations de référence désignent des éléments identiques.

Le dispositif suivant la présente invention est un dispositif de stabilisation d'une plate-forme de support d'un objet. Ce dispositif peut avantageusement être utilisé pour stabiliser une plate-forme se trouvant sur un engin mobile, tel qu'un navire, supportant une antenne parabolique pour la réception de signaux émis par un satellite. Il peut également être utilisé pour la stabilisation d'une plate-forme supportant une caméra, un viseur, etc.

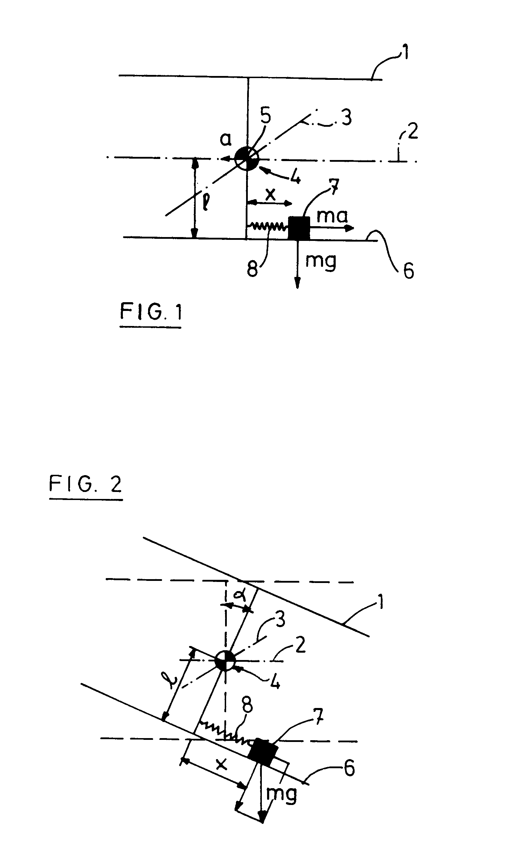

Les figures 1 et 2 montrent une vue schématique du dispositif suivant l'invention.

Une plate-forme 1 peut pivoter autour de deux axes 2,3 coplanaires et perpendiculaires entre eux. Ces pivotements sont réalisés par un système de suspension 4 tel qu'un cardan. La plate-forme 1 a son centre de gravité 5 situé à l'intersection des deux axes de pivotement 2,3. De cette manière, la plate-forme 1 est insensible aux accélérations parallèles au plan contenant les deux axes de pivotement 2,3.

Sur une surface inférieure de glissement 6 de la plate-forme 1 peut se déplacer une masselotte 7, à l'encontre de l'action d'un moyen élastique, tel qu'un ressort 8. Ce ressort 8 tend à ramener la masselotte 7 dans une position prédéterminée.

Le système de suspension 4 est solidaire d'un engin mobile (non montré) soumis à des accélérations a. L'effet d'accélérations parallèles au plan contenant les axes 2 et 3 est nul sur la plate-forme 1, car son centre de gravité 5 se trouve à l'intersection des axes de pivotement 2 et 3. Cette plate-forme 1 est donc insensible à ces accélérations.

Quant à la masselotte 7 glissant sur la surface inférieure 6 de la plate-forme 1 à l'encontre de l'action d'un ressort 8, elle subit l'effet de l'accélération.

Le déplacement de cette masselotte 7 dans le sens des forces d'inertie crée un couple $(mg)x$

dans le sens horlogique autour du centre de gravité 5 de la plate-forme, tandis que le ressort 8 tendu par le déplacement de la masselotte 7 crée un couple $(kx)l$ ou $(ma)l$ dans le sens anti-horlogique. Dans ces couples, x désigne le déplacement de la masselotte 7 par rapport à sa position prédéterminée et donc l'allongement du ressort 8, l désigne la distance entre le centre de gravite 5 de la plate-forme 1 et la plan de glissement 6 de la masselotte 7, g est l'accélération due à la pesanteur, k est la constante de rappel du ressort 8 et a est l'accélération due à la force appliquée à l'engin mobile.

Le couple résultant $(mg.x-kx.l)$ est nul, si le poids de la masselotte $(mg)$ est égal à la constante de rappel $(k)$ du ressort 8 multipliée par le distance $(l)$ entre le centre de gravité 5 de la plate-forme 1 et le plan de glissement 6 de la masselotte 7.

Si, par un effet quelconque, la plate-forme pivote autour de l'axe 3 d'un angle $\alpha$ dans le sens horlogique par rapport à une position prédéterminée (représentée en traits interrompus), un couple de rappel sera créé (fig. 2). Le couple dans le sens horlogique autour de l'axe 3 vaut $mgcos(\alpha).x$ et le couple dans le sens antihorlogique vaut $mgsin(\alpha).l$. Le couple résultant C dans le sens horlogique est donc égal à $(mgcos(\alpha)x-mgsin(\alpha)1)$ ou encore, comme $kx=mgsin(\alpha=klsin(\alpha)$ et donc $x-lsin(\alpha)$ (la force de la masselotte dans la direction de glissement due à la gravité étant égale à la force de rappel du ressort), $C=-mglsin(\alpha)(1-cos(\alpha))$. Le signe du couple C est toujours opposé au signe de l'angle $\alpha$ car $cos(\alpha) < 1$ et donc tend à ramener la plate-forme vers sa position prédéterminée représentée en traits interrompus.

Le système réagit donc comme un pendule du point de vue de son couple de rappel ou stabilisateur.

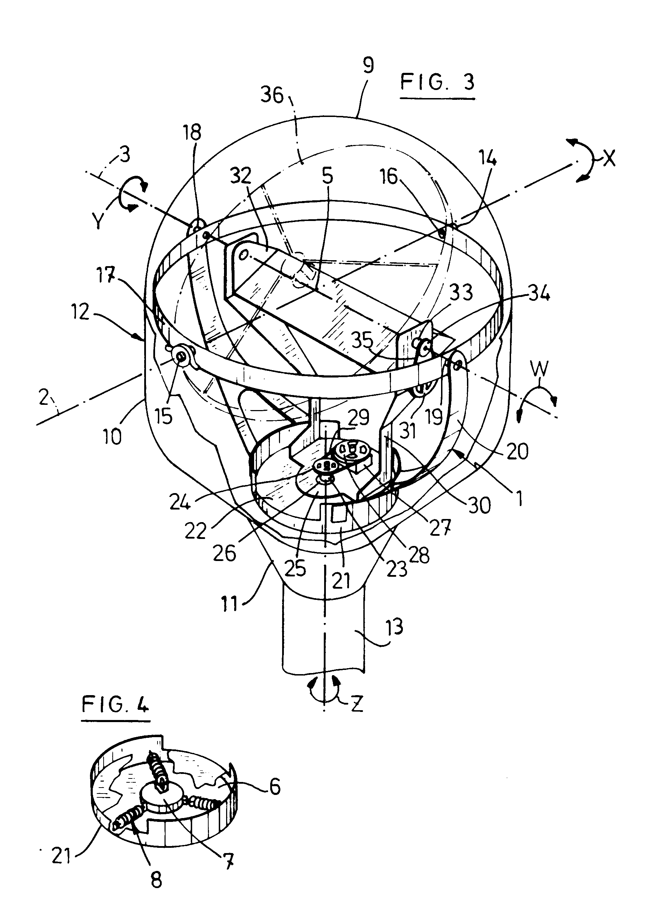

La figure 3 montre une forme de réalisation d'un dispositif de stabilisation suivant l'invention.

Un randome 12 faisant office de support est solidaire, par un pied 13 de forme cylindrique, d'un engin mobile (non représenté) tel qu'un navire. Ce radome 12 possède une coupole hémisphérique 9, un corps de forme cylindrique 10 et une base troconique 11. Ce radome 12 est construit en une matière, telle que du polyester, n'atténuant que peu la réception de signaux émis par un satellite. Sur ce radome 12 sont fixés deux bouts d'arbre ayant un même axe de révolution 2. Sur ces deux bouts d'arbre 14,15 sont montés deux roulements à billes 16 fixés dans un anneau circulaire 17. Cet anneau 17 peut dès lors pivoter autour de l'axe 2 dans le sens des flèches X. Sur cet anneau 17 sont fixés deux bouts d'arbre 18,19 dirigés vers les parois intérieures du radome 12. Sur ces bouts d'arbre 18,19 sont montés des roulements à billes fixés à des jambes 20 de la plate-forme 1.

La plate-forme, désignée dans son ensemble par le notation de référence 1, comprend les pièces suivantes :

- deux jambes 20 portant les roulements à billes 19, se scindant en deux avant d'être fixées à une boîte 21 ;
- une boîte 21 qui porte à sa partie supérieure 22 un arbre fixe 23 sur lequel est calée une poulie 24 ;
- une plaque 25 supportée par la partie supérieure 22 de la boîte 21 via des roulements à billes non représentés, cette plaque 25 étant percée d'un orifice dans lequel vient se loger un roulement à billes 26, et supportant un moteur 27 entraînant une poulie 28 ;
- une courroie 29 ;
- deux bras 30 solidaires de la plaque 25 munis de roulements à billes logés dans des trous percés dans les tronçons verticaux supérieurs de ces bras 30 ;
- un moteur pas à pas entraînant une poulie 31, fixé à un des bras 30 ;
- une pièce de support 32 soliaire de deux bouts d'arbres 33 dont l'un est muni d'une poulie 34 ;
- une courroie 35, et
- un objet 36 représenté en traits mixtes solidaire de la pièce 32, cet objet pouvant être une antenne.

La plate-forme 1 peut pivoter (sens des flèches X et Y) autour des axes de révolution 2,3 des bouts d'arbres 14,15 et 18,19.

Ces axes 2,3 coplanaires et perpendiculaires entre eux sont des axes de symétrie de l'anneau 17.

Le centre de gravité 5 de la plate-forme 1 sans masselotte se trouve à l'intersection des axes de symétrie 2,3 de l'anneau 17.

La poulie 28 met en rotation (sens des flèches Z), grâce à la courroie 29, la plaque 25 sur laquelle se trouve le moteur 27.

L'axe de rotation de la plaque 25 est perpendiculaire à cette plaque 25 et passe par le centre de gravité 5 de la plate-forme 1.

La poulie 31 mise en rotation par un moteur pas à pas entraîne, via la courroie 35, la poulie 34 (sens des flèches W). La rotation de cette poulie 34 solidaire de la pièce 32 supportant l'objet 36 permet de donner l'inclinaison voulue à la pièce 32 et donc à l'objet 36. L'axe de pivotement de la pièce 32 supportant l'objet 36 se trouve dans le plan contenant les axes de symétrie 2,3 de l'anneau 17.

Les bras 30 sont constitués d'un tronçon vertical, d'un tronçon oblique dirigé vers les parois du radome 12 et enfin d'un tronçon vertical percé de deux trous où sont logés des roulements à billes.

Quant aux jambes 20, elles ont une forme circulaire et se scindent en deux parties avant d'être fixées à la boîte 21 de forme cylindrique.

La figure 4 est une vue en perspective montrant la boîte 21 ouverte. La masselotte 7 peut glisser sur le fond 6 (formant une surface de glissement) de la boîte 21 à l'encontre de l'action de ressorts 8 tendant à ramener en permanence la masselotte 7 dans une position prédéterminée. Ces ressorts 8 sont fixés aux parois de la boîte 21. Ils sont au nombre de trois et sont placés radialement dans la boîte 21 de manière que deux ressorts 8 voisins forment entre eux un angle d'environ 120° ouvert vers les parois de la boîte 21.

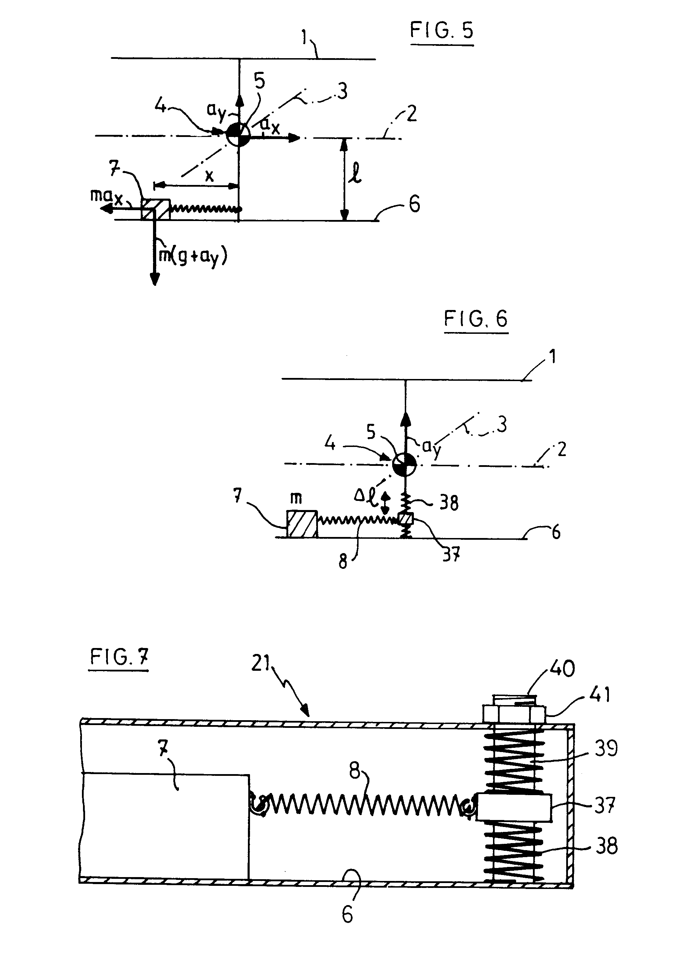

La figure 5 représente une vue similaire à celle de la figure 1, si ce n'est que l'on a représenté sur cette figure un système de suspension 4 soumis à des accélérations $a_x$ parallèles au plan contenant les axes de pivotement 2,3 et à des accélérations $a_y$ perpendiculaires à ce plan.

L'effet de ces accélérations est nul sur la plate-forme 1, puisque sont centre de gravité 5 se trouve à l'intersection des axes de pivotement 2 et 3. Cette plate-forme 1 est donc insensible à ces accélérations.

La masselotte 7 glisse sur la surface inférieure 6 de la plate-forme 1 à l'encontre de l'action d'un ressort 8, puisqu'elle subit l'effet de l'accélération $a_x$.

Ce déplacement de la masselotte 7 dans le sens des forces d'inertie crée un couple dans le sens antihorlogique autour du centre de gravité 5 de la plate-forme 1, ce couple étant égal à $m(g + a_y)x$ et un couple dans le sens horlogique, ce couple étant égal à $ma_x l$ ou $kxl$ où $k$ est la constante d'élasticité du ressort 8 et $x$ désigne le déplacement de la masselotte 7 par rapport à sa position prédéterminée.

Le couple résultant C est donc égal à

$$C = -m(g + a_y)x + kxl.$$

Dans le cas où le système de stabilisation ne subit pas d'accélérations $a_y$, le couple C est nul lorsque $mg = kl$.

En admettant que la distance $l$ soit égale à une distance constante $l_o$ majorée d'une distance variable $\Delta l$, le couple résultant devient :

$$C = -m(g + a_y)x + kx(l_o + \Delta l)$$

ou encore

$$C = -mgx + kxl_o$$
$$-ma_y x + kx\Delta l$$

Si la masselotte 7 a un poids $mg$ sensiblement égal à la distance $l_o$ multipliée par la constante $k$ du ressort 8, cette distance $l_o$ correspondant à la distance entre le centre de gravité 5 et le plan de glissement 6 lorsque le système 4 n'est pas soumis à des accélérations perpendiculaires audit plan de glissement 6, le couple C est égal à

$$C_1 = -ma_y x + kx\Delta l.$$

A la figure 6, un dispositif 4 permettant d'annuler ce couple $C_1$ est représenté de façon schématique.

Ce dispositif de stabilisation 4 est siliaire à celui représenté à la figure 5, si ce n'est que le ressort de rappel 8 de la masselotte 7 est fixé à une pièce 37 soumise à l'action de ressorts 38, cette pièce 37 étant mobile dans une direction perpendiculaire au plan de glissement 6.

Lorsque le dispositif 4 submit une accélération $a_y$, la pièce 37 se déplace perpendiculairement au plan de glissement 6 à l'encontre de l'effet du ressort 38. Le déplacement $\Delta l$ de cette pièce 37 est égal à

$$\Delta l = \frac{m' \, a_y}{k'}$$

où $m'$ est la masse de la pièce 37 et $k'$ est la constante du ressort 38.

Pour annuler ledit couple $C_1$, il faut que

$$m \, a_y \, x = kx\Delta l$$

ou

$$m \, a_y \, x = kx \, \frac{m' \, a_y}{k'}$$

c'est-à-dire

$$\frac{m}{k} = \frac{m'}{k'}$$

La figure 7 est une vue partielle en coupe d'une boîte similaire à celle représentée à la figure 4.

La boîte 21 se différencie de celle de la figure 4 par le fait que les ressorts de rappel 8 qui tendent à ramener en permanence la masselotte 7 dans une position prédéterminée sont fixés à des pièces annulaires 37. Ces dernières peuvent chacune glisser le long d'une tige 39 à l'encontre de l'action d'un ressort 38 dans une direction perpendiculaire au plan de glissement 6 de la masselotte 7. Cette tige 39 présente à ses extrémités 40 une partie filetée de manière à permettre la fixation de ladite tige à la boîte 21 au moyen d'écrous 41.

La masse des pièces annulaires 37 est égale à la masse de la masselotte 7 multipliée par la constante du ressort 38 et divisée par la constante du ressort 8.

Il est évident qu'au lieu d'utiliser des pièces annulaires 37 glissant le long d'une tige 39 à l'encontre de l'action d'un ressort 38, il est possible de suspendre toute la boîte 21 à un moyen élastique, ce moyen permettant à la boîte de se déplacer le long d'un axe perpendiculaire aux axes de pivotement 2,3 de la plate-forme 1.

D'autre part, au lieu de prévoir trois ressorts 8, on peut en prévoir un plus grand nombre et au lieu de stabiliser la plate-forme 1 à l'aide d'une boîte 21 contenant une masselotte 7, on peut stabiliser la plate-forme 1 à l'aide de plusieurs boîtes contenant chacune une masselotte. Il est également possible d'installer deux boîtes stabilisant chacune la plate-forme 1 dans des directions orthogonales entre elles, chaque boîte étant alors munie d'au moins deux ressorts et d'au moins une masselotte.

Au lieu d'utiliser la force de rappel de ressorts pour stabiliser la plate-forme 1, on peut employer des forces de pression ou des forces dues aux déplacements d'un fluide ou une masse en caoutchouc cellulaire comme moyen élastique.

Le dispositif suivant l'invention présente ainsi l'avantage de permettre d'obtenir une plate-forme 1 insensible aux accélérations horizontales et verticales, en particulier aux accélérations variables.

Le dispositif suivant l'invention ne présente, par ailleurs, aucune fréquence de résonance.

Il est évident que l'invention n'est pas limitée à la forme de réalisation resprésentée et que bien des modifications peuvent être apportées dans la forme, la disposition et la constitution de certains des éléments intervenant dans sa réalisation, à condition que ces modifications ne soient pas en contradiction avec l'objet de chacune des revendications suivantes.

**Revendications**

1. Dispositif pour stabiliser mécaniquement, par rapport à un support (12) soumis à des forces d'inertie tendant à l'écarter d'une position prédéterminée, une plate-forme (1) comportant une pièce (32) à laquelle est fixé un objet (36), cette plate-forme (1) étant reliée au support (12) par un système de suspension (4) comportant deux axes (2,3) coplanaires et perpendiculaires entre eux, de façon à permettre un pivotement de la plate-forme (1) par rapport au support (12), caractérisé en ce qu'une masselotte (7) mobile sur un plan de glissement (6) de la plate-forme (1) est soumise à l'action d'au moins un moyen élastique (8) tendant à ramener cette masselotte (7) en permanence vers une position prédéterminée, cette masselotte (7) ayant un poids mg sensiblement égal à la distance I entre le centre de gravité (5) de la plate-forme (1) de l'objet susdit sans la masselotte (7) et le plan de glissement (6) multipliée par la constante glissement (6) multipliée par la constante d'élasticité (k) du moyen élastique et en ce que le centre de gravité (5) se trouve à l'intersection des axes (2,3) précités.

2. Dispositif suivant la revendication 1, caractérisé en ce que le plate-forme (1) comporte un plateau inférieur qui en est solidaire et qui présente une face constituant le plan de glissement (6) de la masselotte (7).

3. Dispositif suivant la revendication 1, caractérisé en ce que la masselotte (7) est reliée par au moins un moyen élastique (8) à une pièce (37) mobile dans une direction perpendiculaire au plan de glissement précité (6) à l'encontre d'un autre moyen élastique (38).

4. Dispositif suivant la revendication 1, caractérisé en ce que le système de suspension (4) est constitué par un anneau (17) suspendu au support (12) précité de manière à pouvoir pivoter autour d'un premier axe de symétrie (2), cet anneau (17) présentant un second axe de symétrie (3) coplanaire et perpendiculaire au premier axe de symétrie (2), autour duquel peut pivoter la plate-forme (1).

5. Dispositif suivant l'une quelconque des revendications 1 à 3, caractérisé en ce que le plateau (22) de la plate-forme (1) précitée porte une plaque (25) pouvant tourner autour d'un axe perpendiculaire à ce plateau (22) et passant par le centre de gravité (5) de la plate-forme (1).

6. Dispositif suivant la revendication 5, caractérisé en ce que la plate-forme (1) est munie de moyens permettant de faire pivoter la pièce (32) portant l'objet (36) autour d'un axe se trouvant dans le plan formé par les axes de symétrie (2,3) de l'anneau (17).

7. Dispositif suivant la revendication 6, caractérisé en ce que les moyens pour faire pivoter l'objet (36) sont constitués par un moteur électrique pas à pas fixé à un bras (30) d'une paire de bras (30) reliant la plaque (25) à la pièce (32) faisant partie de la plate-forme (1), pouvant pivoter par rapport à ces bras (30).

8. Dispositif suivant l'une quelconque des revendications 1 à 7, caractérisé en ce que le plan de glissement (6) précité est constitué par le fond d'une boîte (21) dans laquelle la masselotte (7) est mobile à l'encontre de l'action de ressorts (8) tendant à ramener en permanence cette masselotte (7) dans une position prédéterminée.

9. Dispositif suivant la revendication 8, caractérisé en ce que la boîte (21) précitée est une boîte cylindrique dans laquelle la masselotte mobile (7) est reliée à trois ressorts (8) radiaux dont les axes forment entre eux un angle de 120°.

10. Dispositif suivant les revendications 3 et 8, caractérisé en ce que les ressorts (8) tendant à ramener la masselotte (7) dans une position prédéterminée sont fixés chacun à une pièce annulaire (37) pouvant glisser dans une direction perpendiculaire au plan de glissement (6) de la masselotte (7), le long d'une tige (39) à l'encontre de l'action d'un ressort (38).

11. Dispositif suivant l'une quelconque des revendications précédentes, caractérisé en ce que l'objet (36) porté par la plate-forme (1) est une antenne parabolique.

12. Dispositif suivant l'une quelconque des revendications précédentes, caractérisé en ce que le support mobile (12) est un radome destiné à être monté sur un engin mobile terrestre ou maritime.

**Claims**

1. Device for mechanically stabilising, in relation to a support (12) subjected to inertial forces tending to separate it from a predetermined position, a platform (1) comprising a component (32) to which is fixed an object (36), this platform (1) being connected to the support (12) by a suspension system (4) comprising two coplanar and mutually perpendicular axes (2, 3) such as to permit a swivelling of the platform (1) in relation to the support (12), characterised in that a flyweight (7) which can move over a sliding plane (6) of the platform (1) is subjected to the action of at least one elastic means (8) tending continually to return this flyweight (7) to a predetermined position, this flyweight (7) having a weight mg approximately equal to the distance I between the centre of gravity (5) of the platform (1) of the abovementioned object without the flyweight (7) and the sliding plane (6), multiplied by the elastic constant (k) of the elastic means, and in that the centre of gravity (5) lies at the intersection of the abovementioned axes (2, 3).

2. Device according to Claim 1, characterised in that the platform (1) comprises a lower deck which is integral with it and which presents one face constituting the sliding plane (6) for the flyweight (7).

3. Device according to Claim 1, characterised in that the flyweight (7) is connected by at least one elastic means (8) to a component (37) which can move in a direction perpendicular to the abovementioned sliding plane (6) against another elastic means (38).

4. Device according to Claim 1, characterised in that the suspension system (4) consists of a ring (17) suspended from the abovementioned support (12) so as to be able to swivel about a first axis of symmetry (2), this ring (17) presenting a second axis of symmetry (3) coplanar with and perpendicular to the first axis of symmetry (2), around which the platform (1) can swivel.

5. Device according to any one of Claims 1 to 3, characterised in that the deck (22) of the abovementioned platform (1) carries a plate (25) capable of rotating about an axis perpendicular to this deck (22) and passing through the centre of gravity (5) of the platform (1).

6. Device according to Claim 5, characterised in that the platform (1) is provided with means enabling the component (32) carrying the object (36) to be made to swivel about an axis lying in the plane formed by the axes of symmetry (2, 3) of the ring (17).

7. Device according to Claim 6, characterised in that the means of making the object (36) swivel consist of a stepped electric motor fixed to one arm (30) of a pair of arms (30) connecting the plate (25) to the component (32) forming part of the platform (1), capable of swivelling in relation to these arms (30).

8. Device according to any one of Claims 1 to 7, characterised in that the abovementioned sliding plane (6) consists of the bottom of a box (21) in which the flyweight (7) can move against the action of springs (8) tending continually to return this flyweight (7) to a predetermined position.

9. Device according to Claim 8, characterised in that the abovementioned box (21) is a cylindrical box in which the moving flyweight (7) is connected to three radial springs (8) whose axes form an angle of 120° between them.

10. Device according to Claims 3 and 8, characterised in that the springs (8) tending to return the flyweight (7) to a predetermined position are each fixed to an annular component (37) capable of sliding in a direction perpendicular to the sliding plane (6) for the flyweight (7), along a rod (39) against the action of a spring (38).

11. Device according to any one of the preceding claims, characterised in that the object (36) carried by the platform (1) is a parabolic antenna.

12. Device according to any one of the preceding claims, characterised in that the moving support (12) is a radome intended to be mounted on a land or sea moving craft.

**Patentansprüche**

1. Vorrichtung zur mechanischen Stabilisierung einer Plattform (1), die ein Teil (32) enthält, an dem ein Objekt (36) befestigt ist, in Bezug auf eine Halterung (12), welche Trägheitskräften ausgesetzt ist, die darauf abzielen, sie von einer vorgegebenen Position zu entfernen, wobei die Plattform (1) mit der Halterung (12) durch eine Aufhängungsvorrichtung (4) verbunden ist, die zwei koplanare und senkrecht zueinander stehende Achsen (2,3) enthält, dergestalt, daß sich die Plattform (1) in Bezug auf die Halterung (12) drehen kann, dadurch gekennzeichnet, daß ein In der Gieitebene (6) der Plattform (1) mobiler Schlagbolzen (7) der Einwirkung mindestens eines elastischen Mittels (8) ausgesetzt ist, welches darauf abzielt, diesen Schlagbolzen (7) permanent in eine vorgegebene Position zu bringen, wobei dieser Schlagbolzen (7) ein Gewicht mg hat, das in etwa gleich dem Abstand I zwischen dem Schwerpunkt (5) der Plattform (1) des vorgenannten Objektes ohne den Schlagbolzen (7) und der Gleitebene (6) multipliziert mit der Elastizitätskonstanten (k) des elastischen Mittels ist und ferner dadurch, daß sich der Schwerpunkt (5) im Schnittpunkt der vorgenannten Achsen (2, 3) befindet.

2. Vorrichtung nach Anspruch 1, dadurch gekennzeichnet, daß die Plattform (1) eine mit dieser festverbundene untere Platte enthält, deren eine Seite die Gleitebene(6)des Schlagbolzens (7) bildet.

3. Vorrichtung nach Anspruch 1, dadurch gekennzeichnet, daß der Schlagbolzen (7) mittels eines elastischen Mittels (8) mit einem Teil (37) verbunden ist, welches senkrecht zur vorgenannten Gleitebene (6) in Gegenrichtung zu einem anderen elastischen Mittel (38) beweglich ist.

4. Vorrichtung nach Anspruch 1, dadurch gekennzeichnet, daß die Aufhängungsvorrichtung (4) aus einem Ring (17) besteht, der an der vorgenannten Halterung (12) so aufgehängt ist, daß er sich um eine erste Symmetrieachse (2) drehen kann, wobei dieser Ring (17) eine zweite koplanare und senkrecht zur ersten Symmetrieachse (2) stehende Symmetrieachse (3) aufweist, um welche sich die Plattform (1) drehen kann.

5. Vorrichtung nach irgendeinem der Ansprüche 1 bis 3, dadurch gekennzeichnet, daß die Platte (22) der vorgenannten Plattform (1) eine Scheibe (25) aufweist, die sich um eine Achse drehen kann, die senkrecht zu dieser Platte (22) steht und durch den Schwerpunkt (5) der Plattform (1) geht.

6. Vorrichtung nach Anspruch 5, dadurch gekennzeichnet, daß die Plattform (1) mit Mitteln versehen ist, die es ermöglichen, das Teil (32), welches das Objekt (36) trägt, um eine Achse zu drehen, die sich in der Ebene befindet, welche aus den Symmetriachsen (2,3) des Ringes (17) gebildet wird.

7. Vorrichtung nach Anspruch 6, dadurch gekennzeichnet, daß die Mittel, mit Hilfe derer das Objekt (36) gedreht werden kann, aus einem Elektroschrittmotor bestehen, der an einem Arm (30) eines Armpaares (30) befestigt ist, welches die Scheibe (25) mit dem Teil (32), das Teil der Plattform (1) ist, verbindet, die sich in Bezug auf diese Arme (30) drehen kann.

8. Vorrichtung nach irgendeinem der Ansprüche 1 bis 7, dadurch gekennzeichnet, daß die vorgenannte Gleitebene (6) von dem Boden einer Dose (21) gebildet wird, in welcher der Schlagbolzen (7) beweglich entgegen der Einwirkung von Federn (8) ist, welche darauf abzielen, diesen Schlagbolzen permanent in eine vorgegebene Position zu bringen.

9. Vorrichtung nach Anspruch 8, dadurch gekennzeichnet, daß die vorgenannte Dose (21) eine zylinderförmige Dose ist, in welcher der bewegliche Schlagbolzen (7) mit drei radialen Federn (8) verbunden ist, deren Achsen zueinander einen Winkel von 120° bilden.

10. Vorrichtung nach den Ansprüchen 3 bis 8, dadurch gekennzeichnet, daß die Federn (8), welche darauf abzielen, den Schlagbolzen in eine vorgegebene Position zu bringen, je an einem ringförmigen Stück (37) befestigt sind, das senkrecht zur Gleitebene (6) des Schlagbolzens (7) entlang eines Stabes (39) entgegen der Einwirkung einer Feder (38) gleiten kann.

11. Vorrichtung nach irgendeinem der vorgenannten Ansprüche, dadurch gekennzeichnet, daß das Objekt (36), welches von der Plattform (1) getragen wird, eine Parabolantenne ist.

12. Vorrichtung nach irgendeinem der vorgenannten Ansprüche, dadurch gekennzeichnet, daß die bewegliche Halterung (12) ein Radom ist, das zur Montage auf einem beweglichen Land- oder Wassergerät bestimmt ist.

FIG. 1

FIG. 2

FIG. 3

FIG. 4

FIG. 5

FIG. 6

FIG. 7